# EUROPÄISCHE PATENTSCHRIFT

(11) **EP 1 230 289 B1**
(45) Veröffentlichungstag und Bekanntmachung des Hinweises auf die Patenterteilung: **08.12.2004**
(21) Anmeldenummer: 00964106.9
(22) Anmeldetag: 05.09.2000
(51) Int. Cl.: C08G 65/26, C08G 18/48

(54) **VERFAHREN ZUR HERSTELLUNG VON BLOCKWEICHSCHAUMPOLYOLEN**
METHOD FOR PRODUCING FLEXIBLE BLOCK FOAM POLYOLS
PROCEDE DE PREPARATION DE POLYOLS A MOUSSE SOUPLE EN BLOC

(30) Priorität: 17.09.1999 DE 19944762
(43) Veröffentlichungstag der Anmeldung: 14.08.2002
(73) Patentinhaber: BASF AKTIENGESELLSCHAFT, 67056 Ludwigshafen (DE)
(72) Erfinder: GROSCH, Georg, Heinrich, 67098 Bad Dürkheim (DE); LARBIG, Harald, 67063 Ludwigshafen (DE); LORENZ, Reinhard, 48366 Laer (DE); JUNGE, Dieter, 67227 Frankenthal (DE); HARRE, Kathrin, 01109 Dresden (DE)
(86) Internationale Anmeldenummer: PCT/EP2000/008640
(87) Internationale Veröffentlichungsnummer: WO 2001/021682

(56) Entgegenhaltungen:
- EP-A- 0 217 116
- WO-A-91/14726
- US-A- 4 008 189
- US-A- 4 487 854
- US-A- 5 563 221
- CHEMICAL ABSTRACTS, vol. 76, no. 6, 1972 Columbus, Ohio, US; abstract no. 26046p, KUMADA KOIJI ET AL : "Use of specified polyrether polyolsin preparing soft polyurethane foams" Seite 37; XP002157225 & JP 07 128793 A (SANYO CHEMICAL IND.) 20. August 1971 (1971-08-20)

## Beschreibung

Die Erfindung betrifft ein Verfahren zur Herstellung von Polyetheralkoholen, die nach diesem Verfahren hergestellten Polyetheralkohole sowie deren Verwendung zur Herstellung von Polyurethanen.

Polyetheralkohole werden in großen Mengen zur Herstellung von Polyurethanen eingesetzt. Ihre Herstellung erfolgt zumeist durch katalytische Anlagerung von niederen Alkylenoxiden, insbesondere Ethylenoxid und Propylenoxid, an H-funktionelle Startsubstanzen. Als Katalysatoren werden zumeist basische Metallhydroxide oder Salze verwendet, wobei das Kaliumhydroxid die größte praktische Bedeutung hat.

Üblicherweise erfolgt die Anlagerung der Alkylenoxide als Block oder als statistisches Gemisch. Bei der blockweisen Anlagerung wird nur ein Alkylenoxid gleichzeitig angelagert, bei der statistischen Mischung befindet sich ein Gemisch von Alkylenoxiden in der Reaktionsmischung.

In der Technik werden als Alkylenoxide zumeist Ethylenoxid und Propylenoxid eingesetzt, da diese gut verfügbar und preisgünstig sind. Die Reaktivität des Ethylenoxids ist dabei höher als die des Propylenoxids, so daß die Anlagerung des Ethylenoxids mit einer höheren Reaktionsgeschwindigkeit abläuft. Zur Erhöhung der Raum-Zeit-Ausbeute bei der Herstellung von Polyetheralkoholen wäre es daher wünschenswert, daß der Anteil des Ethylenoxids im Polyetheralkohol möglichst hoch ist. Es ist bekannt und üblich, Polyetheralkohole, die für die Anwendung in Weichschaumstoffen bestimmt sind, mit endständigen Ethylenoxidblöcken zu versehen. Durch die damit verbundene Erhöhung der Zahl der primären Hydroxylgruppen der Polyetheralkohole steigt deren Reaktivität bei der Umsetzung mit den Polyisocyanaten an. Mit der Erhöhung des Ethylenoxidanteils im Polyetheralkohol steigt jedoch auch die Hydophilie des Polyetheralkohols, was unter anderem zu einer unerwünschten Gelbildung der Polyetheralkohole führen kann.

Weiterhin kommt es bei der Synthese von Polyetheralkoholen mit langen Ketten, wie sie zur Herstellung von Polyurethan-Weichschäumen eingesetzt werden, bei fortschreitendem Kettenwachstum zu Nebenreaktionen, die zu Störungen im Kettenaufbau führen. Diese Nebenprodukte werden als ungesättigte Bestandteile bezeichnet und führen zu einer Beeinträchtigung der Eigenschaften der resultierenden Polyurethane. Es hat daher in der Vergangenheit nicht an Versuchen gefehlt, Polyetheralkohole mit einem niedrigen Gehalt an ungesättigten Bestandteilen bereitzustellen. Hierzu verden insbesondere die eingesetzten Alkoxylierungskatalysatoren gezielt verändert. So wird in EP-A-268 922 vorgeschlagen, Cäsiumhydroxid einzusetzen. Damit kann zwar der Gehalt an ungesättigten Anteilen gesenkt werden, Cäsiumhydroxid ist jedoch teuer und problematisch zu entsorgen.

Weiterhin ist die Verwendung von Multimetallcyanidkomplex-Verbindungen, zumeist Zinkhexacyanometallaten, auch als DMC-Katalysatoren bezeichnet, zur Herstellung von Polyetheralkoholen mit niedrigen Gehalten an ungesättigten Bestandteilen bekannt. Es gibt eine große Zahl von Dokumenten, in denen die Herstellung derartiger Verbindungen beschreibt. So wird in DD-A-203 735 und DD-A-203 734 die Herstellung von Polyetherolen unter Verwendung von Zinkhexacyanocobaltat beschrieben wird.

Auch die Herstellung der Zinkhexacyanometallate ist bekannt. Üblicherweise erfolgt die Herstellung dieser Katalysatoren, indem Lösungen von Metallsalzen, wie Zinkchlorid, mit Lösungen von Alkali- oder Erdalkalimetallcyanometallaten, wie Kaliumhexacyanocobaltat, umgesetzt werden. Zur entstehenden Fällungssuspension wird in der Regel sofort nach dem Fällungsvorgang eine wassermischbare, Heteroatome enthaltende Komponente zugegeben. Diese Komponente kann auch bereits in einer oder in beiden Eduktlösungen vorhanden sein. Diese wassermischbare, Heteroatome enthaltende Komponente kann beispielsweise ein Ether, Polyether, Alkohol, Keton oder eine Mischung davon sein. Derartige Verfahren sind beispielsweise in US 3,278,457, US 3,278,458, US 3,278,459, US 3,427,256, US 3,427,334, US 3,404,109, beschrieben.

Polyetheralkohole, die zur Herstellung von Blockweichschäumen verwendet werden, besitzen in der Regel unmittelbar an der Startsubstanz einen vollständigen Propylenoxid-Innenblock, der bis zu 40 Gew.-% des gesamten Polyols betragen kann, und auf diesem Propylenoxid-Innenblock Mischblöcke aus Propylenoxid und Ethylenoxid, die mindestens 60 Gew.-% des gesamten Polyols betragen und mindestens 2 Gew.-% an Ethylenoxid enthalten. Diese Polyole werden in der Regel mittels basischer Katalyse hergestellt. WO-A-97/27,236 beschreibt die Herstellung eines Blockweichschaumpolyols, wobei mindestens der Propylenoxid-Innenblock unter Verwendung von Multimetallcyaniden als Katalysator angelagert wird. Bei diesem Verfahren ist jedoch eine weitere Steigerung des Gehaltes an Ethylenoxid im Polyetheralkohol ohne die oben geschilderten Nachteile nicht möglich.

Aufgabe der Erfindung war es Polyetheralkohole zu entwickeln, die einen hohen Gehalt an Ethylenoxid aufweisen, ohne daß es zu einer signifikanten Zunahme der Hydrophilie der Produkte kommt.

Diese Aufgabe konnte überraschenderweise gelöst werden durch einen Polyetheralkohol, herstellbar durch ringöffnende Polymerisation von Ethylenoxid und Alkylenoxiden mit mindestens 3 Kohlenstoffatomen, der einen Innenblock aus Ethylenoxid oder einem Gemisch aus Ethylenoxid und Alkylenoxiden mit mindestens 3 Kohlenstoffatomen, enthält, und danach mindestens ein Alkylenoxid mit mindestens 3 Kohlenstoffatomen, oder ein Gemisch aus Ethylenoxid und Alkylenoxiden mit mindestens 3 Kohlenstoffatomen, vorzugsweise Propylenoxid, enthält, wobei die Mischblöcke vorzugsweise mindestens 2 Gew.-% und maximal 20 Gew.-% an Ethylenoxid, bezogen auf das Gemisch, enthalten.

Gegenstand der Erfindung sind demzufolge Polyetheralkohole, herstellbar durch ringöffnende Polymerisation von Ethylenoxid und Propylenoxid an H-funktionelle Startsubstanzen, dadurch gekennzeichnet, daß an die Startsubstanz maximal 40 Gew.-%, bezogen auf das Gewicht des Polyetheralkohols, Ethylenoxid oder ein Gemisch aus Ethylenoxid und Alkylenoxiden mit mindestens 3 Kohlenstoffatomen, mit einem Gehalt an Ethylenoxid von mindestens 98 Gew.-%, bezogen auf das Gemisch, angelagert wird und danach mindestens ein Alkylenoxid mit mindestens 3 Kohlenstoffatomen, oder ein Gemisch aus Ethylenoxid und mindestens einem Alkylenoxid mit mindestens 3 Kohlenstoffatomen, mit einem Gehalt von maximal 20 Gew.-% Ethylenoxid, bezogen auf das Gemisch, angelagert wird und als Katalysator mindestens eine Multimetallcyanidverbindung eingesetzt wird.

Falls ein Gemisch aus Ethylenoxid und mindestens einem Alkylenoxid mit mindestens 3 Kohlenstoffatomen angelagert wird, sollte der Gehalt an Ethylenoxid mindestens 0,5 Gew.-%, bezogen auf das Gemisch, betragen.

Als Alkylenoxide mit mindestens 3 Kohlenstoffatomen im Molekül kommen vorzugsweise Propylenoxid, Butylenoxid und iso-Butylenoxid sowie beliebige Gemische aus mindestens zwei der genannten Alkylenoxide, besonders bevorzugt Propylenoxid, zum Einsatz.

In einer bevorzugten Ausführungsform der vorliegenden Erfindung kann dem Polyetheralkohol am Kettenende, das heißt nach der Anlagerung der Alkylenoxide mit mindestens 3 Kohlenstoffatomen beziehungsweise des Gemisches aus Ethylenoxid und Alkylenoxiden mit mindestens 3 Kohlenstoffatomen, noch Ethylenoxid angelagert werden. Vorzugsweise beträgt die Menge dieses am Kettenende angelagerten Ethylenoxids maximal 15 Gew.-%, bezogen auf das Gewicht des Polyetheralkohols. Derartige Polyetheralkohole werden vorzugsweise zur Herstellung von Polyurethan-Kaltformschäumen verwendet. Erfindungsgemäße Polyetheralkohole ohne diesen Endblock aus Ethylenoxid werden vorzugsweise zur Herstellung von Polyurethan-Weichschäumen, insbesondere Blockweichschäumen, eingesetzt.

Überraschenderweise hat sich gezeigt, daß die Hydrophilie der erfindungsgemäßen Polyetheralkohole bei gleicher Menge an Ethylenoxid in der Polyetherkette deutlich geringer ist als die von herkömmlichen Polyetheralkoholen mit einer anderen Verteilung der Alkylenoxide in der Kette.

Gegenstand der Erfindung ist weiterhin ein Verfahren zur Herstellung der oben beschriebenen Polyetheralkohole. Die Herstellung der erfindungsgemäßen Polyetheralkohole erfolgt durch ringöffnende Polymerisation der Alkylenoxide Ethylenoxid und der Alkylenoxide mit mindestens 3 Kohlenstoffatomen an H-funktionelle Startsubstanzen in Anwesenheit von Katalysatoren, wie in Anspruch 6 beschrieben.

In der Ausführungsform der des erfindungsgemäßen Verfahrens werden als Katalysator zur Anlagerung der Alkylenoxide Multimetallcyanide, häufig auch als DMC-Katalysatoren bezeichnet, eingesetzt. Die Vorteile beim Einsatz dieser Katalysatoren liegen zum einen in der höheren Reaktionsgeschwindigkeit bei der Anlagerung der Alkylenoxide, zum anderen zeichnen sich die so hergestellten Poyletheralkohole durch einen geringeren Gehalt an ungesättigten Bestandteilen aus. Nachteilig an dieser Ausführungsform ist jedoch, daß es bei der Verwendung von DMC-Katalysatoren zu einem verzögerten Anspringen der Reaktion am Reaktionsstart kommen kann.

In weiteren bevorzugten Ausfürungsformen des erfindungsgemäßen Verfahrens werden die verschiedenen Abschnitte der Polyetherkette unter Verwendung unterschiedlicher Katalysatoren angelagert, wie in Ansprüchen 7 + 8 beschrieben. So ist es vorteilhaft, den Ethylenoxidblock am Kettenanfang mit basischen Katalysatoren anzulagern und den sich anschließenden, ganz oder überwiegend aus Alkylenoxiden mit mindestens 3 Kohlenstoffatomen bestehenden Block mit DMC-Katalysatoren anzulagern. Der gegebenenfalls am Kettenende befindliche Block aus Ethylenoxid kann ebenfalls mittels DMC-Katalysatoren, vorzugsweise jedoch mittels basischer Katalysatoren angelagert werden. Diese Verfahrensführung hat den Vorteil, daß die bei der Verwendung von Multimetallcyanidkatalysatoren an Reaktionsstart häufig auftretende Verzögerung vermieden wird. Dem steht ein erhöhter Aufwand durch den zusätzlichen Reingungsschritt gegenüber.

Bei der Verwendung unterschiedlicher Katalysatoren kann es notwendig sein, vor dem Wechsel der Katalysatoren den Polyetheralkohol vom Katalysator zu reinigen. Insbesondere beim Wechsel von basischen Katalysatoren auf DMC-Katalysatoren wird meist eine gründliche Reinigung durchgeführt, da Spuren des basischen Katalysators, insbesondere bei der üblichen Verwendung von Alkalimetallhydroxiden, den DMC-Katalysator vergiften können.

Gegenstand der Erfindung sind weiterhin Polyurethane, herstellbar durch Umsetzung von Polyisocyanaten mit Verbindungen mit mindestens zwei mit Isocyanatgruppen reaktiven Wasserstoffatomen, dadurch gekennzeichnet, daß als Verbindungen mit mindestens zwei mit Isocyanatgruppen reaktiven Wasserstoffatomen die erfindungsgemäßen Polyetheralkohole eingesetzt werden. Die erfindungsgemäßen Polyetheralkohole werden vorzugsweise zur Herstellung von Polyurethan-Weichschaumstoffen eingesetzt, wobei die Polyetheralkohole ohne endständigen Ethylenoxidblock insbesondere zur Herstellung von Blockschaumstoffen und Heißformschaumstoffen und die Polyetheralkohole mit endständigem Ethylenoxidblock insbesondere zur Herstellung von Kaltformschaumstoffen eingesetzt werden.

Als Startsubstanzen für die Herstellung der erfindungsgemäßen Polyetherole werden die hierfür bekannten mehrfunktionellen Alkohole mit 2 bis 8 Hydroxylgruppen im Molekül, verwendet. Insbesondere kommen zur Herstellung von Polyetheralkoholen, wie sie üblicherweise zur Herstellung von Polyurethan-Weichschaumstoffen eingesetzt werden, 2- und/oder 3-funktionelle Alkohole, beispielsweise Ethylenglykol, Propylenglykol, Glycerin, Trimethylolpropan, zum Einsatz.

Die erfindungsgemäßen Polyetheralkohole haben vorzugsweise ein Molekulargewicht im Bereich von 1000 bis 100 000 .

Als Alkylenoxide kommen, wie bereits ausgeführt, Ethylenoxid und Alkylenoxide mit mindestens 3 Kohlenstoffatomen, in den bereits genannten Mengenverhältnissen zum Einsatz.

Die als Katalysatoren für das erfindungsgemäße Verfahren eingesetzten Multimetallcyanide haben zumeist die allgemeine Formel (I)

M¹ ₐ[M²(CN)_{b}(A)_{c}]_{d} · fM¹gXₙ · h (H2O) · eL (I),

wobei
- M¹: ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺,
- M²: ein Metallion, ausgewählt aus der Gruppe, enthaltend Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺
bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether Ester, Harnstoffe, Amide, Nitrile, und Sulfide,
bedeuten, sowie
- a, b, c, d, g und n: so ausgewählt sind, daß die Elektroneutralität der Verbindung gewährleistet ist, und
- e: die Koordinationszahl des Liganden,
- f: eine gebrochene oder ganze Zahl größer oder gleich 0
- h: eine gebrochene oder ganze Zahl größer oder gleich 0
bedeuten.

Die Herstellung dieser Verbindungen erfolgt nach allgemein bekannten Verfahren, indem man die wäßrige Lösung eines wasserlöslichen Metallsalzes mit der wäßrigen Lösung einer Hexacyanometallatverbindung, insbesondere eines Salzes oder einer Säure, vereinigt und dazu während oder nach der Vereinigung einen wasserlöslichen Liganden gibt.

Die Multimetallcyanidverbindungen eignen sich aufgrund ihrer hohen Aktivität hervorragend zur Synthese der erfindungsgemäßen Polyetheralkohole. Die verwendeten Katalysatorkonzentrationen sind kleiner 1 Gew.-%, bevorzugt kleiner 0,5 Gew.-%, besonders bevorzugt kleiner 1000 ppm, insbesondere kleiner 500 ppm, besonders bevorzugt kleiner 100 ppm bezogen auf die Gesamtmasse des hergestellten Polyetherpolyols. Die Herstellung der Polyetheralkohole mittels der Multimetallcyanidverbindungen kann sowohl kontinuierlich oder diskontinuierlich erfolgen. Die Synthese kann in Suspensions-, Festbett-, Fließbett oder Schwebebettfahrweise erfolgen.

Bei den Reaktionsbedingungen Druck und Temperatur gibt es keine prinzipiellen Unterschiede zwischen der Katalyse mittels basischer Verbindungen und mittels Multimetallcyanidverbindungen. Die Anlagerung der Alkylenoxide wird bei Temperaturen zwischen 50°C und 200°C, wobei Temperaturen zwischen 90°C und 150°C bevorzugt werden, und Drücken im Bereich von 0,001 bar und 100 bar, bei Anlagerung von Alkylenoxiden mit mindestens 3 Kohlenstoffatomen im Molekül vorzugsweise zwischen 0,001 bar und 20 bar, bei Anlagerung von Ethylenoxid vorzugsweise zwischen 1 und 40 bar durchgeführt. Vor der Dosierung der Alkylenoxide wird das Reaktionsgefäß üblicherweise durch Spülen mit einem Inertgas, beispielsweise Stickstoff, inertisiert.

An die Anlagerung der Alkylenoxide schließt sich üblicherweise eine Nachreaktionsphase an, um einen vollständigen Umsatz der Alkylenoxide zu bewirken.

Nach der Umsetzung wird der entstandene Polyetheralkohol wie üblich aufgearbeitet, indem zunächst nicht umgesetztes Alkyenoxid und andere leicht flüchtige Bestandteile durch Strippen oder Destillation sowie, falls erforderlich, Schwebstoffe und/oder mechanische Verunreinigungen mittels Filtration aus dem Roh-Polyetheralkohol entfernt werden.

Falls der letzte Verfahrensschritt basisch katalysiert war, muß der Katalysator wie üblich aus dem Polyetheralkohol entfernt werden. Dazu wird der basische Katalysator üblicherweise mit einer Säure neutralisiert und die entstehenden Salze mittels Filtration aus dem Polyetheralkohol entfernt.

Falls der letzte Verfahrensschritt mit Multimetallcyanidverbindungen katalysiert wurde, kann der Katalysator prinzipiell im Polyetheralkohol verbleiben, falls erforderlich, kann er auch entfernt werden, beispielsweise mittels Filtration.

Die erfindungsgemäßen Polyetheralkohole eignen sich hervorragend zur Herstellung von Polyurethanen, insbesondere Polyurethan-Weichschaumstoffen. Sie sind sehr gut mit den anderen Bestandteilen der Polyurethan-Rezepturen verträglich und sind, trotz ihres vergleichsweise hohen Gehaltes an Ethylenoxid-Einheiten in der Polyetherkette, wenig hydrophil. Auf Grund der höheren Reaktionsgeschwindigkeit der Polymerisation von Ethylenoxid im Vergleich zu Propylenoxid ist die Raum-Zeit-Ausbeute bei der Herstellung der erfindungsgemäßen Polyetheralkohole höher als bei herkömmlichen Polyetheralkoholen für die gleichen Einsatzgebiete. Eine weitere Steigerung der Raum-Zeit-Ausbeute kann erreicht werden, wenn zumindest ein Teil der Alkylenoxide mittels Multimetallcyanidverbindungen als Katalysator angelagert wird.

Die Erfindung soll an nachfolgenden Beispielen näher erläutert werden:

### Beispiele 1 und 2

### Anlagerung von Ethylenoxid an eine Startsubstanz

### Beispiel 1

In einem 10 1 Reaktor wurden 1115 g Glycerin und 32,5 g einer 47 %-igen wäßrigen Kaliumhydroxidlösung vorgelegt. Das Wasser wurde bei 95 bis 100 °C im Vakuum von kleiner 1 mm Quecksilbersäule in einer Zeit von 1,5 Stunden entfernt. Bei 110 °C und einem Stickstoffvordruck von 3,5 bar abs. wurden 3980 g Ethylenoxid innerhalb von 6 Stunden zudosiert. Nach erfolgter Abreaktion wurde ein Wasserstrahlvakuum angelegt und anschließend zur Entfernung des Katalysators 250 g Magnesiumsilicat Ambosol® 50 g Wasser zugegeben und der Polyetheralkohol anschließend filtriert und durch Destillation entwässert.

Der entstandene Polyetheralkohol wies folgende Kennwerte auf: Hydroxylzahl: 394 mgKOH/g, Viskosität bei 25°C: 240 mPa*s, Kaliumgehalt: 5 ppm.

### Beispiel 2

Es wurde verfahren wie in Beispiel 1, jedoch wurden 612 g Glycerin, 31,7 g einer 47 %-igen wäßrigen Kaliumhydroxidlösung und 4356 g Ethylenoxid umgesetzt.

Der entstandene Polyetheralkohol wies folgende Kennwerte auf: Hydroxylzahl: 219 mg KOH/g, Viskosität bei 25 °C: 222 mPa*s, Kaliumgehalt: 3 ppm.

### Beispiele 3 und 4

### Herstellung der Polyetheralkohole

Die Synthesen wurde in einem 10 l Rührreaktor ausgeführt. Bei 50°C wurden die Reaktionsprodukte aus den Beispielen 1 und 2 eingefüllt. Durch dreimaliges Evakuieren und anschließendes Füllen mit Stickstoff wurde der Reaktorinhalt inertisiert. Die Entgasung erfolgte durch 1,5 stündiges Evakuieren bei 105 °C und einem Druck von kleiner 1 mbar abs.. Dann wurde ein Doppelmetallcyanidkatalysator aus der Umsetzung von Zinkacetat mit Kobalthexacyanosäure und tert.-Butanol zugegeben. Wiederum wurde dreimal evakuiert und mit Stickstoff gefüllt. Daran schloß sich eine ca. halbstündige Evakuierung Temperaturerhöhung auf 125 °C, mit einer Evakuierung auf einen Druck kleiner 1 mbar abs. an. Bei dieser Temperatur wurde ein Gemisch aus Propylenoxid und Ethylenoxid zugegeben.
Nach weiteren 30 min bei 125 °C wurde der entstandene Polyetheralkohol im Vakuum von leicht flüchtigen Bestandteilen befreit.
Zur Abtrennung des Katalysators wurde über eine doppelte Schicht eines Seitz-Tiefenfilters (K 900) filtriert.

Die Einsatzmengen der Ausgangsstoffe die und Kennzahlen der hergestellten Polyetheralkohole sind der Tabelle 1 zu entnehmen.

### Ergebnis:

Alle Polyetheralkohole weisen einen Innenblock aus Glyzerin und Ethylenoxid auf. In Beispiel 3 schließt sich daran ein Mischblock aus Ethylenoxid und Propylenoxid an, in Beispiel 4 folgt ein Block aus Propylenoxid.

Es wurden Polyetheralkohole erhalten, die nur einen geringen Anteil an ungesättigten Bestandteilen aufweisen. Auf Produkte mit sehr niedriger Hydroxylzahl sind nach dem erfindungsgemäßen Verfahren zugänglich. Die Molekulargewichtsverteilungen der Polyetheralkohole sind in allen Fällen eng.

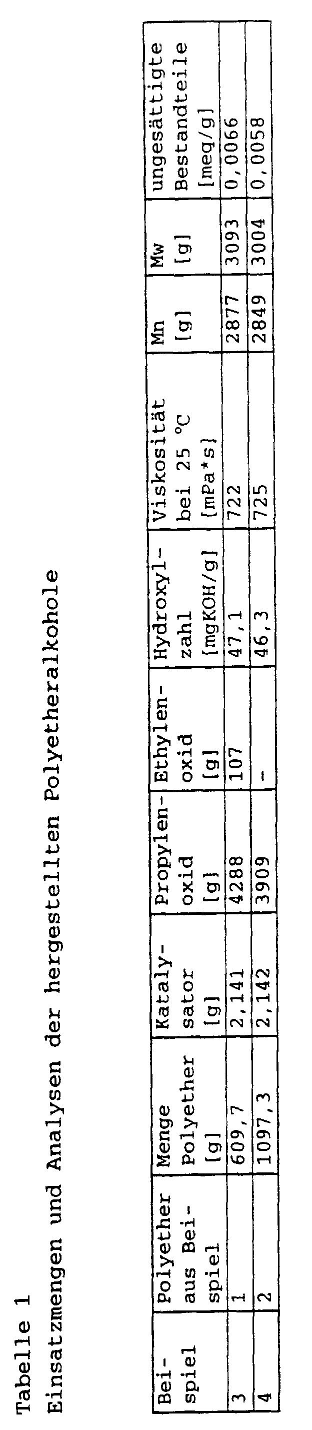

### Beispiel 5 (Vergleichsbeispiel) und 6

### Herstellung von Schaumstoffen

Die in der Tabelle 2 dargestellten Polyol- und Isocyanatkomponenten wurden in dem Vergleichsbeispiel 5 und in dem Beispiel 6 zu Polyurethanweichschaumstoffen umgesetzt. Die Bestandteile der Polyolkomponente wurden intensiv vermischt. Danach wurde das Isocyanat unter Rühren hinzugegeben und die Reaktionsmischung in eine offene Form vergossen, worin sie zum Polyurethan-Schaumstoff ausschäumte.

Die Produkteigenschaften der erfindungsgemäßen Polyurethan-Schaumstoff sind ebenfalls in der Tabelle 2 zusammengefaßt. Die verwendeten Prüfnormen sind in der Tabelle 3 zusammengestellt.

**Tabelle 2:**

| Herstellung und Eigenschaften von Blockweischschaumstoffen | | | |
|---|---|---|---|
| | | **Beispiel 5 (V)** | **Beispiel 6** |
| Polyolkomponente | Hydroxylzahl [mgKOH/g] | **Menge [g]** | **Menge [g]** |
| Polyol A | 48 | 1000 | |
| Polyol aus Beispiel 4 | 48 | | 1000 |
| Wasser | 6233 | 38 | 38 |
| BF 2370 | | 10 | 10 |
| Aminkatalysator N 201 | 560 | 1,9 | 1,9 |
| Aminkatalysatoor N 206 | 426 | 0,6 | 0,6 |
| Zinnkatalysator K 29 | 0 | 2,3 | 2,5 |
| Summe | | 1053 | 1053,0 |

| Isocyanatkomponente | **NCO [%]** | **Menge [g]** | **Menge [g]** |
|---|---|---|---|
| TDI 80/20 | 48,3 | 488,0 | 488,0 |
| Index | | **110** | **110** |

| **Prüfdaten** | **Einheit** | | |
|---|---|---|---|
| Startzeit | [s] | 15 | 10 |
| Abbindezeit | [s] | 90 | 80 |
| Steigzeit | [s] | 90 | 85 |
| Steighöhe | [mm] | 275 | 265 |
| Steighöhe nach 5 min | [mm] | 270 | 260 |
| Luftdurchlässigkeit | [mmWs] | 10 | 10 |
| Rohdichte | [kg/m3] | 25,3 | 26,4 |
| Stauchhärte bei 40% | [kPa] | 4,7 | 4,1 |
| Zugfestigkeit | [kPa] | 79,1 | 88 |
| Dehnung | [%] | 121 | 146 |
| Druckverformungsrest bei 50% | [%] | 2,4 | 2,4 |
| Polyol A: Mit Glyzerin gestarteter Polyetheralkohol mit einem Innenblock aus 30 Gewichtsteilen Propylenoxid und einem sich daran anschließenden Gemisch aus 57 Gewichtsteilen Propylenoxid und 10 Gewichtsteilen Ethylenoxid. | | | |

**Tabelle 3:**

| Prüfnormen | |
|---|---|
| **Prüfmethode** | **Prüfnorm** |
| Rohdichte | DIN 53420 |
| Zugversuch (Zugfestigkeit, Dehnung | DIN 53571 |
| Druckverformungsrest | DIN 53572 |
| Rückprall-Elastizität | DIN 53573 |
| Eindruckhärte | DIN 53576 |
| Stauchhärte | DIN 53577 |

## Patentansprüche

1. Polyetheralkohole, herstellbar durch ringöffnende Polymerisation von Ethylenoxid und mindestens einem Alkylenoxid mit mindestens 3 Kohlenstoffatomen im Molekül an H-funktionelle Startsubstanzen, **dadurch gekennzeichnet, daß** an die Startsubstanz Ethylenoxid oder ein Gemisch aus Ethylenoxid und mindestens einem Alkylenoxid mit mindestens 3 Kohlenstoffatomen im Molekül mit einem Gehalt an Ethylenoxid von mindestens 98 Gew.-%, bezogen auf das Gemisch, jeweils in einer Menge von maximal 40 Gew.-%, bezogen auf das Gewicht des Polyetheralkohols, angelagert wird und danach mindestens ein Alkylenoxid mit mindestens 3 Kohlenstoffatomen im Molekül oder ein Gemisch aus Ethylenoxid und mindestens einem Alkylenoxid mit mindestens 3 Kohlenstoffatomen im Molekül mit einem Gehalt von maximal 20 Gew.-% Ethylenoxid, bezogen auf das Gemisch, angelagert wird, und als Katalysator mindestens eine Multimetallcyanidverbindung eingesetzt wird.

2. Polyetheralkohole nach Anspruch 1, **dadurch gekennzeichnet, daß** als Alkylenoxide mit mindestens 3 Kohlenstoffatomen im Molekül Propylenoxid, Butylenoxid, iso-Butylenoxid oder beliebige Gemische aus mindestens zwei der genannten Alkylenoxide eingesetzt werden.

3. Polyetheralkohole nach Anspruch 1, **dadurch gekennzeichnet, daß** Alkylenoxid mit mindestens 3 Kohlenstoffatomen im Molekül Propylenoxid, eingesetzt wird.

4. Polyetheralkohole nach Anspruch 1, **dadurch gekennzeichnet, daß** am Kettenende Ethylenoxid angelagert wird.

5. Polyetheralkohole nach Anspruch 4, **dadurch gekennzeichnet, daß** am Kettenende maximal 15 Gew.-% Ethylenoxid, bezogen auf das Gewicht des Polyetheralkohols, angelagert werden.

6. Verfahren zur Herstellung von Polyetheralkoholen durch ringöffnende Polymerisation von Ethylenoxid und mindestens einem Alkylenoxid mit mindestens 3 Kohlenstoffatomen im Molekül an H-funktionelle Startsubstanzen, **dadurch gekennzeichnet, daß** an die Startsubstanz Ethylenoxid oder ein Gemisch aus Ethylenoxid und mindestens einem Alkylenoxid mit mindestens 3 Kohlenstoffatomen im Molekül mit einem Gehalt an Ethylenoxid von mindestens 98 Gew.-%, bezogen auf das Gemisch, jeweils in einer Menge von maximal 40 Gew.-%, bezogen auf das Gewicht des Polyetheralkohols angelagert wird und danach mindestens ein Alkylenoxid mit mindestens 3 Kohlenstoffatomen im Molekül oder ein Gemisch aus Ethylenoxid und mindestens einem Alkylenoxid mit mindestens 3 Kohlenstoffatomen im Molekül mit einem Gehalt von maximal 20 Gew.-% Ethylenoxid, bezogen auf das Gemisch, angelagert wird, und als Katalysator mindestens eine Multimetallcyanidverbindung eingesetzt wird.

7. Verfahren nach Anspruch 6, **dadurch gekennzeichnet, daß** als Katalysator für die Anlagerung des Ethylenoxids oder des Gemisches aus Ethylenoxid und mindestens einem Alkylenoxid mit mindestens 3 Kohlenstoffatomen im Molekül mit einem Gehalt an Ethylenoxid von mindestens 98 Gew.-%, bezogen auf das Gemisch, an die Startsubstanz mindestens eine basische Verbindung und als Katalysator für die Anlagerung des mindestens einem Alkylenoxids mit mindestens 3 Kohlenstoffatomen im Molekül oder des Gemisches aus Ethylenoxid und mindestens einem Alkylenoxid mit mindestens 3 Kohlenstoffatomen im Molekül mit einem Gehalt von maximal 20 Gew.-% Ethylenoxid, bezogen auf das Gemisch, mindestens eine Multimetallcyanidverbindung eingesetzt wird.

8. Verfahren zur Herstellung von Polyetheralkoholen nach Anspruch 4, **dadurch gekennzeichnet, daß** als Katalysator für die Anlagerung des Ethylenoxids oder des Gemisches aus Ethylenoxid und mindestens einem Alkylenoxid mit mindestens 3 Kohlenstoffatomen im Molekül mit einem Gehalt an Ethylenoxid von mindestens 98 Gew.-%, bezogen auf das Gemisch, an die Startsubstanz mindestens eine basische Verbindung und als Katalysator für die Anlagerung des mindestens einem Alkylenoxids mit mindestens 3 Kohlenstoffatomen im Molekül oder des Gemisches aus Ethylenoxid und mindestens einem Alkylenoxid mit mindestens 3 Kohlenstoffatomen im Molekül mit einem Gehalt von maximal 20 Gew.-% Ethylenoxid, bezogen auf das Gemisch, mindestens eine Multimetallcyanidverbindung, und als Katalysator zur Anlagerung des Ethylenoxids am Kettenende mindestens eine basische Verbindung eingesetzt wird.

9. Polyurethane, herstellbar durch Umsetzung von Polyisocyanaten mit Verbindungen mit mindestens zwei mit Isocyanatgruppen reaktiven Wasserstoffatomen, **dadurch gekennzeichnet, daß** als Verbindungen mit mindestens zwei mit Isocyanatgruppen reaktiven Wasserstoffatomen Polyetheralkohole nach einem der Ansprüche 1 bis 5 eingesetzt werden.

## Claims

1. A polyether alcohol which can be prepared by ring-opening polymerization of ethylene oxide and at least one alkylene oxide having at least three carbon atoms in the molecule onto H-functional initiator substances, wherein ethylene oxide or a mixture of ethylene oxide and at least one alkylene oxide having at least three carbon atoms in the molecule, where the mixture has an ethylene oxide content of at least 98% by weight, based on the mixture, is added, in each case in an amount of not more than 40% by weight, based on the weight of the polyether alcohol, onto the initiator substance and subsequently at least one alkylene oxide having at least three carbon atoms in the molecule or a mixture of ethylene oxide and at least one alkylene oxide having at least three carbon atoms in the molecule, where the mixture has a maximum ethylene oxide content of 20% by weight, based on the mixture, is added on, and at least one multimetal cyanide compound is used as catalyst.

2. A polyether alcohol as claimed in claim 1, wherein propylene oxide, butylene oxide, isobutylene oxide or any mixtures of at least two of the alkylene oxides mentioned are used as alkylene oxides having at least three carbon atoms in the molecule.

3. A polyether alcohol as claimed in claim 1, wherein propylene oxide is used as alkylene oxide having at least three carbon atoms in the molecule.

4. A polyether alcohol as claimed in claim 1, wherein ethylene oxide is added on at the end of the chain.

5. A polyether alcohol as claimed in claim 4, wherein a maximum of 15% by weight of ethylene oxide, based on the weight of the polyether alcohol, is added on at the end of the chain.

6. A process for preparing polyether alcohols by ring-opening polymerization of ethylene oxide and at least one alkylene oxide having at least three carbon atoms in the molecule onto H-functional initiator substances, which comprises adding ethylene oxide or a mixture of ethylene oxide and at least one alkylene oxide having at least three carbon atoms in the molecule, where the mixture has an ethylene oxide content of at least 98% by weight, based on the mixture, in each case in an amount of not more than 40% by weight, based on the weight of the polyether alcohol, onto the initiator substance and subsequently adding on at least one alkylene oxide having at least 3 carbon atoms in the molecule or a mixture of ethylene oxide and at least one alkylene oxide having at least 3 carbon atoms in the molecule, where the mixture has a maximum ethylene oxide content of 20% by weight, based on the mixture, and at least one multimetal cyanide compound is used as catalyst.

7. A process as claimed in claim 6, wherein at least one basic compound is used as catalyst for the addition of the ethylene oxide or of the mixture of ethylene oxide and at least one alkylene oxide having at least 3 carbon atoms in the molecule, where the mixture has an ethylene oxide content of at least 98% by weight, based on the mixture, onto the initiator substance, and at least one multimetal cyanide compound is used as catalyst for adding on the alkylene oxide or oxides having at least 3 carbon atoms in the molecule or the mixture of ethylene oxide and at least one alkylene oxide having at least 3 carbon atoms in the molecule, where the mixture has a maximum ethylene oxide content of 20% by weight, based on the mixture.

8. A process for preparing polyether alcohols as claimed in claim 4, wherein at least one basic compound is used as catalyst for the addition of the ethylene oxide or of the mixture of ethylene oxide and at least one alkylene oxide having at least 3 carbon atoms in the molecule, where the mixture has an ethylene oxide content of at least 98% by weight, based on the mixture, onto the initiator substance and at least one multimetal cyanide compound is used as catalyst for adding on the alkylene oxide or oxides having at least 3 carbon atoms in the molecule or the mixture of ethylene oxide and at least one alkylene oxide having at least 3 carbon atoms in the molecule, where the mixture has a maximum ethylene oxide content of 20% by weight, based on the mixture, and at least one basic compound is used as catalyst for adding on the ethylene oxide at the end of the chain.

9. A polyurethane which can be produced by reacting polyisocyanates with compounds having at least two hydrogen atoms which are reactive toward isocyanate groups, wherein a polyether alcohol as claimed in any of claims 1 to 5 is used as compound having at least two hydrogen atoms which are reactive toward isocyanate groups.

## Revendications

1. Polyétheralcools, pouvant être préparés par polymérisation avec ouverture de cycle, d'oxyde d'éthylène et d'au moins un oxyde d'alkylène ayant au moins trois atomes de carbone dans la molécule, sur des substances de départ à fonctionnalité H, **caractérisés en ce que** l'on fixe par addition de l'oxyde d'éthylène ou un mélange d'oxyde d'éthylène et d'au moins un oxyde d'alkylène ayant au moins trois atomes de carbone dans la molécule, avec une teneur en oxyde d'éthylène d'au moins 98% en poids, par rapport au mélange, à chaque fois en une quantité de 40% en poids au maximum par rapport au poids du polyétheralcool, sur la substance de départ, puis on y fixe par addition au moins un oxyde d'alkylène ayant au moins trois atomes de carbone dans la molécule ou un mélange d'oxyde d'éthylène et d'au moins un oxyde d'alkylène ayant au moins trois atomes de carbone dans la molécule, avec une teneur de 20% en poids au maximum d'oxyde d'éthylène par rapport au mélange et on met en oeuvre au moins un composé cyanure multimétallique en tant que catalyseur.

2. Polyéthéralcools selon la revendication 1, **caractérisés en ce que** l'oxyde de propylène, l'oxyde de butylène, l'oxyde d'isobutylène, ou des mélanges quelconques d'au moins deux des oxydes d'alkylène cités, sont mis en oeuvre en tant qu'oxydes d'alkylène ayant au moins trois atomes de carbone dans la molécule.

3. Polyétheralcools selon la revendication 1, **caractérisés en ce que** l'oxyde de propylène est mis en oeuvre en tant qu'oxyde d'alkylène ayant au moins trois atomes de carbone dans la molécule.

4. Polyétheralcools selon la revendication 1, **caractérisés en ce que** l'oxyde d'éthylène est fixé par addition à l'extrémité de la chaîne.

5. Polyétheralcools selon la revendication 4, **caractérisés en ce que** 15% en poids au maximum d'oxyde d'éthylène par rapport au poids du polyétheralcool sont fixés par addition à l'extrémité de la chaîne.

6. Procédé de préparation de polyétheralcools par polymérisation avec ouverture de cycle, d'oxyde d'éthylène et d'au moins un oxyde d'alkylène ayant au moins trois atomes de carbone dans la molécule sur des substances de départ à fonctionnalité H, **caractérisé en ce que** l'on fixe par addition de l'oxyde d'éthylène ou un mélange d'oxyde d'éthylène et d'au moins un oxyde d'alkylène ayant au moins trois atomes de carbone dans la molécule avec une teneur en oxyde d'éthylène d'au moins 98% en poids par rapport au mélange à chaque fois en une quantité de 40% en poids au maximum par rapport au poids du polyétheralcoôl, sur la substance de départ puis on y fixe par addition au moins un oxyde d'alkylène ayant au moins trois atomes de carbone dans la molécule ou un mélange d'oxyde d'éthylène et d'au moins un oxyde d'alkylène ayant au moins trois atomes de carbone dans la molécule avec une teneur en oxyde d'éthylène de 20% en poids au maximum par rapport au mélange, et on met en oeuvre au moins un composé cyanure multimétallique en tant que catalyseur.

7. Procédé selon la revendication 6, **caractérisé en ce que** l'on met en oeuvre au moins un composé basique en tant que catalyseur, pour l'addition de l'oxyde d'éthylène ou du mélange d'oxyde d'éthylène et d'au moins un oxyde d'alkylène, ayant au moins trois atomes de carbone dans la molécule avec une teneur en oxyde d'éthylène d'au moins 98% en poids, par rapport au mélange, et on met en oeuvre au moins un composé cyanure multimétallique en tant que catalyseur pour l'addition d'au moins un oxyde d'alkylène ayant au moins trois atomes de carbone dans la molécule ou du mélange d'oxyde d'éthylène et d'au moins un oxyde d'alkylène ayant au moins trois atomes de carbone dans la molécule avec une teneur de 20% en poids au maximum d'oxyde d'éthylène, par rapport au mélange.

8. Procédé de préparation de polyétheralcools selon la revendication 4, **caractérisé en que** l'on met en oeuvre au moins un composé basique en tant que catalyseur pour l'addition d'oxyde d'éthylène ou du mélange d'oxyde d'éthylène et d'au moins un oxyde d'alkylène ayant au moins trois atomes de carbone dans la molécule avec une teneur en oxyde d'éthylène d'au moins 98% en poids par rapport au mélange, sur la substance de départ et on met en oeuvre au moins un composé cyanure multimétallique en tant que catalyseur pour l'addition du au moins un oxyde d'alkylène ayant au moins trois atomes de carbone dans la molécule ou du mélange d'oxyde d'éthylène et d'au moins un oxyde d'alkyléne ayant au moins trois atomes de carbone dans la molécule avec une teneur en oxyde d'éthylène de 20% en poids au maximum, par rapport au mélange et on met en oeuvre au moins un composé basique en tant que catalyseur pour l'addition de l'oxyde d'éthylène sur l'extrémité de la chaîne.

9. Polyuréthanes, pouvant être préparés par réaction de polyisocyanates avec des composés ayant au moins deux atomes d'hydrogène réagissant avec des groupes isocyanates, **caractérisés en ce que** des polyétheralcools selon l'une quelconque des revendications 1 à 5 sont mis en oeuvre en tant que composés ayant au moins deux atomes d'hydrogène réagissant avec des groupes isocyanates.
